## Europäisches Patentamt
## European Patent Office
## Office européen des brevets

(11) Veröffentlichungsnummer: **0 180 938**
**B1**

(12) # EUROPÄISCHE PATENTSCHRIFT

(45) Veröffentlichungstag der Patentschrift:
29.03.89

(51) Int. Cl.⁴: **D 06 B 1/14**, D 06 B 19/00

(21) Anmeldenummer: **85113959.2**

(22) Anmeldetag: **02.11.85**

(54) Anordnung zum Aufbringen von Flüssigkeiten auf laufende Warenbahnen.

(30) Priorität: **03.11.84 DE 3440257**

(43) Veröffentlichungstag der Anmeldung:
**14.05.86 Patentblatt 86/20**

(45) Bekanntmachung des Hinweises auf die Patenterteilung:
**29.03.89 Patentblatt 89/13**

(84) Benannte Vertragsstaaten:
**AT BE CH DE FR GB IT LI NL SE**

(56) Entgegenhaltungen:
**CH-A-421 878**
**FR-A-2 173 546**
**GB-A-2 114 471**

(73) Patentinhaber: **Babcock Textilmaschinen GmbH, Hittfelder Kirchenweg, D-2105 Seevetal- Maschen (DE)**

(72) Erfinder: **Tischbein, Claus, Dipl.- Ing., Wittenhögen 12, D-2110 Buchholz 24 (DE)**

(74) Vertreter: **Struck, Willi, Dr.- Ing., Friedrich- Ebert- Strasse 10f, D-2060 Pinneberg (DE)**

EP 0 180 938 B1

## Beschreibung

Die Erfindung betrifft eine Anordnung zum Aufbringen von Flüssigkeiten, insbes. Farbflotten auf laufende Warenbahnen.

Zum Aufbringen von Behandlungsflotten auf Warenbahnen werden bisher in der Regel Tauchtröge verwendet, in denen die Behandlungsflotte befindlich ist und durch die die Warenbahnen hindurchgeführt werden. In diesen Trögen wird die Flotte den Warenbahnen mit großem Flottenüberschuß angeboten, d. h. in solchen Mengen, daß die Flotte nur zu einem Teil von der Ware aufgenommen werden kann.

Für die Forderung, daß die Ware gut und gleichmäßig von der Farbflotte durchnetzt werden und die Luft möglichst restlos aus der Ware verdrängt werden soll, sind allerdings, wie die Erfahrung gezeigt hat, keineswegs so hohe Flottenüberschüsse erforderlich, wie sie bisher durch den Troginhalt gegeben waren.

Um die Flottenverluste z. B. beim Wechsel einer Farbflotte, was durch Zunahme von kurzen Partien mit ungleicher Farbe immer häufiger vorkommt, zu verringern, wurden in die bekannten Flottentröge schon Verdränger eingesetzt, durch die zwar der Flotteninhalt der Tröge reduziert wird, die aber die Strömungsquerschnitte für die Flotte stark einengen. Durch Substantivitätsunterschiede der einzelnen Farbstoffteile einer Farbflotte kommt es dabei zu Nuancenverschiebungen über die Warenbreite insbesondere bei großen Warenbreiten, aber auch bei schmaler Ware. Wird die Flotte, die bereits mit der Ware in Kontakt war mit der Nachsatzflotte nicht intensiv vermischt, kann es zu unterschiedlichen Farbnuancen über die Warenbahnlänge kommen. Auch direkter Kontakt von Frischflotte mit der Ware muß aus den gleichen Gründen vermieden werden.

CH-A-421 728 zeigt eine Vorrichtung bei der die Flotte in den Zwickel zwischen der Warenbahn und der Umlenkwalze eingespritzt wird.

Durch die vorliegende Erfindung soll nun die Aufgabe gelöst werden, diese Schwierigkeiten durch den ungleichmäßigen Auftrag der Behandlungsflotte auf die Warenbahn zu vermeiden und insbesondere zu erreichen, daß an der Behandlung möglichst nur die geringste für den erwünschten Behandlungseffekt unbedingt erforderliche Menge an Behandlungsflotte beteiligt ist, so daß beispielsweise beim Farbwechsel die aus der Behandlung abzuführende, also nicht mehr zu verwendete Farbflotte auf ein Minimum begrenzt und dadurch das Färben kurzer Partien wirtschaftlicher gestaltet wird.

Zur Lösung dieser Aufgabe wird bei einer Anordnung der eingangs genannten Art vorgeschlagen, die Flotte aus einem Vorratsbehälter zunächst einem Vorlagebehälter mit kleinem Volumen dosiert zuzuführen und aus diesem Vorlagebehälter dann mittels einer Pumpe einem oberhalb einer Umlenkwalze ohne Tauchtrog für die Warenbahn angeordneten Verteilerorgan zuzuführen, durch das die Flotte dann in den aus dem auf die Umlenkwalze auflaufenden Trum der zu tränkenden Warenbahn und der Umlenkwalze gebildeten Zwickel in einem Flottenverhältnis von ca. 1,2 bis 1,5 (Gewicht der Ware: Gewicht der Flotte = 1: ca. 1,2 ./. 1,5) eingege-ben wird.

Es liegt im Rahmen der Erfindung, mehrere nacheinander von der Warenbahn umlaufene Umlenkwalzen mit oberhalb der Umlenkwalzen angeordneten Verteilorganen in Laufrichtung der Warenbahn hintereinander anzubringen.

Die Verteilorgane können als Rohre mit über die Warenbahnbreite verteilten Flachstrahl- oder Zungendüsen ausgebildet sein, wobei an den Enden der Verteilorgane einzelne oder mehrere Düsen entsprechend der Warenbahnbreite manuell oder ferngesteuert abschaltbar sein können. Vor den Verteilorganen für die Flotte sollen Flottenauffangrinnen schwenkbar angeordnet sein, um den Zustrom von Flotte zur Bahn eventuell unterbrechen zu können.

Die Verteilorgane können auch als offene Verteilrinnen mit Überläufen ausgeführt sein, wobei in den Zulauf der Flotte zu den Verteilrinnen Dosierblenden eingeschaltet sein sollen.

Es hat sich als zweckmäßig erwiesen, hinter dem Zwickel an der oder den Umlenkwalzen anliegende besondere Verteil- oder Ausgleichwalzen vorzusehen.

Bei trocken in die Behandlung einlaufender Warenbahn kann unterhalb der ersten von der Warenbahn umlaufenen Umlenkwalze ein zusätzlicher Kleintauchtrog angebracht sein, um eine bessere Netzung der Bahn sicherzustellen.

Der oder den Umlenkwalzen mit Verteilorganen können ein Quetschwerk sowie eine diesem gegebenenfalls vorgeschaltete Breitstreckwalze nachgeschaltet sein. Diesen Elementen sollen Spritzschutz- bzw. Auffanggehäuse für die von der Warenbahn abspritzende bzw. abtropfende Flotte zugeordnet sein, welche Abläufe für die Flotte in den Vorlagebehälter aufweisen.

Der Vorlagebehälter soll mit einem Niveauregelventil versehen sein. Am unteren Ende soll ein durch ein Ventil verschließbarer Ablauf angebracht sein und vor dem Einlauf der von der Warenbahn abtropfenden Flotte in den Vorlagebehälter ein Sieb angeordnet sein, welches als umlaufendes Sieb- oder Filterband mit Reinigungsdüsen ausgebildet sein kann.

In der Leitung für die Flotte vom Vorlagebehälter zu dem oder den Verteilorganen kann ein Wärmetauscher für die Aufheizung der Flotte vorgesehen sein.

In die Flottenführung kann eine Flottenmengenregelung für die Eingabe der Flotte in die Verteilorgane in Abhängigkeit von der Warengeschwindigkeit (v), dem Warengewicht (g) und der gewünschten prozentualen Flottenzugabe (f) zur Ware eingeschaltet sein.

An Hand der Zeichnung soll die Erfindung nachfolgend noch weiter erläutert werden. Dabei zeigen in schematischer Darstellung

Fig. 1    ein Ausführungsbeispiel für die Anordnung einer erfindungsmäßigen Farbflottenimprägnierung und

Fig. 2    ein anderes Ausführungsbeispiel für eine Anordnung mit sehr geringen am Imprägniervorgang beteiligten Flottenmengen zur Vorbehandlung von textilen Warenbahnen.

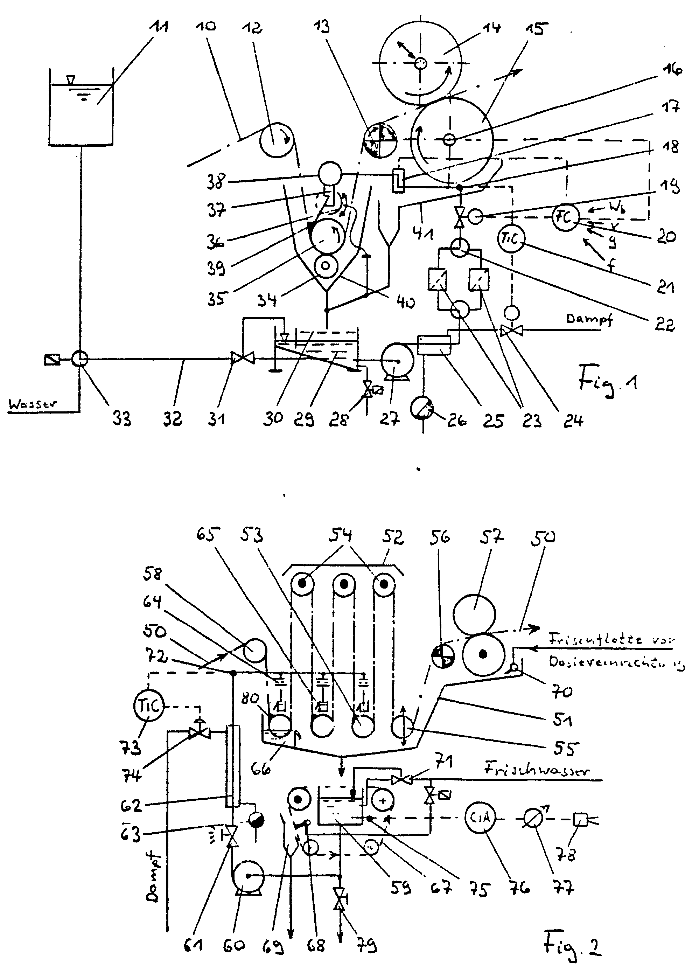

In Fig. 1 fließt die Farbflotte kontinuierlich aus dem Behälter 11 durch die Leitung 32 gesteuert durch den Hahn 33 und in der Menge geregelt durch das Schwimmerventil 31 in den Flottenvorlagebehälter 29. Dieser hat einen möglichst geringen Flotteninhalt. Die Flottenförderpumpe 27 ist geeignet zur schaumarmen schonenden Förderung der Flotte, leicht im Durchfluß zu reinigen und kann mittels Drosselventil im Mengenstrom geregelt werden. Falls die Farbflotte erwärmt werden soll, kann dieses im indirekt mit Dampf beheizten Wärmetauscher 25 geschehen. Hierzu gehören der Temperaturregler 21, der Temperaturfühler 18, das Regelventil 24 und der Kondensatableiter 26. Die Farbflotte fließt weiter durch die Umschalthähne 22 und die Wechselfilter 23 zum Flottenmengen-Regelventil 19. Auf die zwischengeschalteten Filter kann bei ausreichender Filterwirkung des Einlaufsiebes 30 über dem Behälter 29 verzichtet werden.

Die Flottenmenge wird mit dem Durchflußmesser 17 erfaßt, deren Meßsignal zum Flottenmengen-Regler 20 gegeben wird. Als weiteres Eingangssignal gelangt die Warengeschwindigkeit vom Tachogeber in den Regler 20. Manuell oder von einem elektronische lesbaren Datenträger kommend, müssen noch Warengewicht g (kg/m$^2$) und gewünschte prozentuale Flottenzugabe zur Ware f (%) in den Regler 20 eingegeben werden.

Die Flotte wird über das Verteilerrohr 38 und Flachstrahl- oder Zungendüsen 37 in den Zwickel 39 zwischen Warenbahn 10 und Leitwalze 35 verteilt. Zur Anpassung an unterschiedliche Warenbreiten sind einzelne Randdüsen 37 an beiden Enden des Verteilerrohres 38 manuell oder ferngesteuert durch die Warenbahnbreite abschaltbar.

Die Flotte durchnetzt die Ware intensiv durch Nutzung der kinetischen Strömungsenergie der Farbflotte beim Austritt aus den Düsen 37, sowie durch die Wirkung des hydrodynamischen Druckes im Keilspalt zwischen der Leitwalze 35 und Warenbahn 10.

Eine weitere Unterstützung zur intensiven Durchnetzung der Ware und Verdrängung der enthaltenen Luft wird durch die Intensivierungswalze 34 bewirkt.

Weitere Penetrationszeit steht für die Farbflotte auf dem Weg von der Intensivierungwalze 34 über die Breitstreckwalze 13 zu den Quetschwalzen 14 und 15 zur Verfügung. Die Quetschwalze 14 kann zweckmäßig als Variflexwalze ausgeführt sein.

Die beim Quetschvorgang von der Ware entfernte Flotte (ca 20 - 40 % vom Warengewicht) läuft teilweise über die Ware bis zur Leitwalze 35 zurück und unterstützt dabei die Netzung oder über das Leitblech 41 mit Fangtrichter über das Sieb 30 in den Behälter 29. Die von der Ware im Zwickel 39 oder in den Randzonen der Flottenzuführung nicht aufgenommene Flotte fließt ebenfalls über das Sieb in die Behälter 29. Im Behälter 29 und durch die Pumpe 27 sowie auf dem Weg bis zum Verteilerrohr 38 wird die kontinuierlich in den Behälter 29 zugeführte Flotte intensiv mit der rückfließenden Flotte vermischt und dadurch Konzentrationsunterschiede ausgeglichen.

Alle flottenführenden Elemente sind so angeordnet, daß Spülwasser praktisch restlos über das Ventil 28 abfließt. Während dieser Ablaufzeit bzw. in Ruhestellung steht der Hahn 33 so, daß weder Farbflotte noch Spülwasser nachfließen.

Zu Beginn einer Färbung muß die Flottenführung mit Farbflotte gefüllt werden. Hierzu gibt der Hahn 33 den Flottenweg frei. Das Ventil 31 öffnet bis das eingestellte Niveau im Behälter 29 erreicht ist. Durch eine vom Regler 20 simulierte Warengeschwindigkeit läuft die Pumpe 27 an und das Ventil 19 öffnet.

Aus den Düsen austretende Flotte wird von der schwenkbaren Fangrinne 36 aufgefangen und in den Behälter 29 zurückgeleitet. Ware oder ein Vorläufer braucht bei diesem Vorgang nicht zu laufen. Auch während des Durchlaufes des Vorläufers durch den Foulard wird dieser nicht von der Flotte genetzt. Ist die richtige Warengeschwindigkeit nahezu erreicht, wird auf den Tachogeber 16 umgeschaltet. Wenn die Ware kommt, wird die Schwenkrinne 36 abgeschwenkt und Flotte läuft aus.

Bei Farbwechsel wird bei laufendem oder stehendem Nachläufer die Farbflotte abgelassen. Hierzu öffnet das Ventil 28, der Hahn 33 sperrt den Flottennachlauf und schaltet verzögert auf Einspeisung von Spülwasser. Die Spülung der flottenführenden Teile erfolgt zeitgleich mit der automatischen Reinigung aller übrigen flottenbenetzten Teile des Foulards. Nach Ende der Spülzeit sperrt der Hahn 33 von Wasser und Flottenzulauf und das System entleert sich über das Ventil 28. Der Trog 40 dient lediglich als Flottensammler und Spritzschutz.

Die Imprägniereinheit bzw. -anordnung der Fig. 2 besteht aus dem Gehäuse 51, welches offen oder geschlossen sein kann. Bei offenem Gehäuse ist ein Spritzschutz 52 erforderlich. Im Gehäuse befinden sich die nicht angetriebenen Warenführungswalzen 53 und die über Relax angetriebenen Warenführungswalzen 54. Als letzte Walze ist die Pendelwalze 55 vorgesehen. In Warenlaufrichtung folgen eine Breitstreckwalze 56 und das Quetschwerk 57.

Die Ware läuft über die Walze 58 in die Imprägniereinheit ein.

Die Imprägnierflotte wird aus dem kleinen Vorlagegefäß 59 von der Pumpe 60 abgesaugt und über das Regulierventil 61 den dampfbeheizten Wärmetauscher 62 und die Dosierblenden 64 in die Verteilerrinnen 65 gefördert. Diese Rinnen sorgen für gleichmäßige Flottenverteilung über die gesamte Warenbreite. Die Flotte wird durch die Leitbleche an den Rinnen in den Zwickel zwischen Ware und Walzen 53 geleitet. Die Rinnen sind zur Schnellentleerung zwecks Reinigung kippbar. Außerdem sind sie exakt horizontal einstellbar.

Die einlaufende Ware wird im Kleintrog 66 intensiv getränkt. Dieser Trog ist besonders wichtig bei trocken einlaufender Ware.

Die von der Pumpe 60 geförderte Flottenmenge soll nur etwa 120 - 150 % des durchlaufenden trockenen Warengewichtes betragen, d. h. die Menge der von der Ware abtropfenden und aus dem Trog 66 überlaufenden Flottenmenge soll nur gering sein. Die Menge kann von Hand oder mit entsprechender Regeleinrichtung mit Ventil 61 eingestellt werden.

Die Überschußflotte fließt zusammen mit der Quetschflotte und der auf dem Rücklaufblech des Quetscherkes zugeführte Frischflotte in das Vorlagegefäß 59. Wegen des möglicherweise hohen Flusenanfalls (z. B. bei Imprägnierung von Rohware) wird die dem Gefäß 59 zufließende Flotte durch den Bandfilter 67 gefiltert.

Das kontinuierlich oder periodisch umlaufende Filterband wird mittels Frischwasser (oder gefilterten Abwasser) durch Düsen 68 gereinigt. Die Flusen fallen in den Trichter 69.

Die konzentrierte Frischflotte wird proportional zum Warengewichtsdurchsatz über das Verteilerrohr 70 auf dem Rücklaufblech des Quetschwerkes zugeführt. Zur Dosierung dient eine automatische Dosiereinrichtung.

Zur Konstanthaltung des Flottenniveaus im Gefäß 59 wird über das Schwimmerventil 71 Frischwasser zugeführt. Bei erforderlicher Beheizung der Imprägnierflotte wird die Temperatur mit dem Fühler 72 gemessen und mit dem Regler 73 geregelt durch Verstellung des Dampfventils 74. Zur Kontrolle der Dosiereinrichtung kann die Leitfähigkeit der Imprägnierflotte aufgrund des NaOH-Gehaltes mit der Leitfähigkeits-Meßelektrode 75 gemessen und mit dem Meßgerät 26 über das Anzeigegerät 77 angezeigt und Abweichungen vom Sollwert mit akustischem oder optischen Alarmgeber 78 gemeldet werden.

Der Leitwert einer Imprägnierflotte im Beharrungszustand kann zur Einstellung der richtigen Erstbefüllungskonzentration bei Wiederholungsbehandlungen dienen.

## Patentansprüche

1. Anordnung zum Aufbringen von Flüssigkeiten insbes. Farbflotten auf laufende Warenbahnen, wobei die Flotte aus einem Vorratsbehälter (11) zunächst einem Vorlagebehälter (29, 59) mit kleinem Volumen dosiert zugeführt wird und aus diesem Vorlagebehälter dann mittels einer Pumpe (27, 60) einem oberhalb einer Umlenkwalze (35, 53) ohne Tauchtrog für die Warenbahn (10, 50) angeordneten Verteilorgan (37, 38, 65) zugeführt wird, durch das die Flotte dann in den aus dem auf die Umlenkwalze auflaufenden Trum der zu tränkenden Warenbahn und der Umlenkwalze gebildeten Zwickel (39, 80) in einem Flottenverhältnis von ca. 1,2 bis 1,5 (Gewicht der Ware = 1 : ca. 1,2 ./. 1,5) eingegeben wird.

2. Anordnung nach Anspruch 1, dadurch gekennzeichnet, daß mehrere nacheinander von der Warenbahn (10, 50) umlaufene Umlenkwalzen (35, 53) mit oberhalb der Umlenkwalzen angeordneten Verteilorganen (37, 38, 65) in Laufrichtung der Warenbahn hintereinander angebracht sind.

3. Anordnung nach Anspruch 1 und 2, dadurch gekennzeichnet, daß die Verteilorgane (37, 38) als Rohre mit über die Warenbahnbreite verteilten Flachstrahl- oder Zungendüsen ausgebildet sind.

4. Anordnung nach Anspruch 3, dadurch gekennzeichnet, daß an den Enden der Verteilerorgane (37, 38) einzelne oder mehrere Düsen entsprechend der Warenbahnbreite manuell oder ferngesteuert abschaltbar sind.

5. Anordnung nach Anspruch 3 und 4, dadurch gekennzeichnet, daß vor den Verteilerorganen (37, 38) für die Flotte Flottenauffangrinnen (36) schwenkbar angeordnet sind.

6. Anordnung nach Anspruch 1 und 2, dadurch gekennzeichnet, daß die Verteilorgane (65) als offene Verteilrinnen mit Oberläufen ausgeführt sind.

7. Anordnung nach Anspruch 6, dadurch gekennzeichnet, daß in den Zulauf der Flotte zu den Verteilrinnen (65) Dosierblenden (64) eingeschaltet sind.

8. Anordnung nach Anspruch 1 bis 7, dadurch gekennzeichnet, daß hinter dem Zwickel (39, 80) an der oder den Umlenkwalzen (35, 53) anliegende Verteil- oder Ausgleichwalzen (34) vorgesehen sind.

9. Anordnung nach Anspruch 1 bis 8, dadurch gekennzeichnet, daß bei trocken in die Behandlung einlaufender Warenbahn (50) unterhalb der ersten von der Warenbahn umlaufenen Umlenkwalze (53) ein zusätzlicher Kleintauchtrog (66) angebracht ist.

10. Anordnung nach Anspruch 1 bis 9, dadurch gekennzeichnet, daß der oder den Umlenkwalzen (35, 53) mit den Verteilorganen (37, 38, 65) ein Quetschwerk (14, 15, 57) sowie eine diesem gegebenenfalls vorgeschaltete Breitstreckwalze (13, 56) nachgeschaltet sind.

11. Anordnung nach Anspruch 1 bis 10, dadurch gekennzeichnet, daß der oder den Umlenkwalzen (35, 53) mit den Verteilorganen (37, 38, 65) dem Quetschwerk (14, 15, 57) und der Breitstreckwalze (13, 56) Spritzschutz- (40) bzw. Auffanggehäuse (41, 51) für die von der Warenbahn abspritzende bzw. abtropfende Flotte zugeordnet sind, die Abläufe für die Flotte in den Vorlagebehälter (29, 59) aufweisen.

12. Anordnung nach Anspruch 1 bis 11, dadurch gekennzeichnet, daß der Vorlagebehälter (29, 59) mit einem Niveauregelventil (31, 71) versehen ist.

13. Anordnung nach Anspruch 12, dadurch gekennzeichnet, daß am unteren Ende des Vorlagebehälters (29, 59) ein durch ein Ventil (28, 79) verschließbarer Ablauf angebracht ist.

14. Anordnung nach Anspruch 12 und 13, dadurch gekennzeichnet, daß vor dem Einlauf der von der Warenbahn (10, 50) abtropfenden Flotte in den Vorlagebehälter (29, 59) ein Sieb (30) angeordnet ist.

15. Anordnung nach Ansprüch 14, dadurch gekennzeichnet, daß das Sieb als umlaufendes Sieb- oder Filterband (67) mit Reinigungsdüsen (68) ausgebildet ist.

16. Anordnung nach Anspruch 1 bis 15, dadurch gekennzeichnet daß in der Leitung für die Flotte vom Vorlagebehälter (29, 59) zu dem oder den Verteilorganen (37, 38, 65) ein Wärmetauscher (25, 62) für die Aufheizung der Flotte vorgesehen ist.

17. Anordnung nach Anspruch 1 bis 16, dadurch gekennzeichnet, daß in die Flottenführung eine Flottenmengenregelung für die Eingabe der Flotte in die Verteilorgane (37, 38, 65) in Abhängigkeit von der Warengeschwindigkeit (v), dem Warengewicht (g) und der gewünschten prozentualen Flottenzugabe (f) zur Ware eingeschaltet ist

## Claims

1. Arrangement for the application of fluids, especially of dye baths to running webs, with the liquor initially being metered from a storage tank (11) to a small capacity feed tank (29, 59), and then supplied from this storage tank by a pump (27, 60) to a distribution device (37, 38, 65) above the reversal roller (35, 53), without immersion trough for the web (10, 50), through which the liquor is then supplied in a liquor ratio of about 1.2 to 1.5 (weight of the fabric: weight of the liquor = 1; about 1.2 ./. 1.5) in the gusset (39, 80) formed by the web to be soaked running together as a thrum and the reversal roller.

2. Arrangement according to Claim 1, characterised by a sequence of several reversal rollers (35, 53) being rotated by the web (10, 50), with distribution devices (37, 38, 65) being located in sequence above the reversal rollers in the direction of flow of the web.

3. Arrangement according to Claims 1 and 2, characterised by the distribution devices (37, 38) being shaped as pipes with flat jet or tongue nozzles over the web width.

4. Arrangement according to Claim 3, characterised by there being individual or several nozzles at the ends of the distribution devices (37, 38), which can be manually or remotely disconnected according to the width of the web.

5. Arrangement according to Claims 3 and 4, characterised by there being swivelling liquor collection troughs (36) fitted upstream of the distribution devices (37, 38) for the liquor.

6. Arrangement according to Claims 1 and 2, characterised by the distribution devices (65) being designed as open distribution troughs with overflows.

7. Arrangement according to Claim 6, characterised by metering orifices (64) being inserted in the feed of the liquor to the distribution troughs (65).

8. Arrangement according to Claims 1 to 7, characterised by there being distribution or compensating rollers (34) against the reversal roller(s) (35, 53) behind the gusset (39, 80).

9. Arrangement according to Claims 1 to 8, characterised by there being an additional small immersion trough (66) fitted beneath the first reversal roller (53) encompassed by the web for a dry web (50) that enters the process.

10. Arrangement according to Claims 1 to 9, characterised by there being connected downstream of the reversal roller(s) (35, 53) with distribution devices (37, 38, 65), where required, a squeezing apparatus (14, 15, 57) as well as a prior rotary stretcher (13, 56).

11. Arrangement according to Claims 1 to 10, characterised by there being attached to the reversal roller(s) (35, 53) with the distribution devices (37, 38, 65), the squeezing apparatus (14, 15, 57) and the rotary stretcher (13, 56), a spray. arrester (40) or collection housing (41, 51) for the sprayed or dripping liquor from the web, that have drains for the liquor into the feed tank (29, 59).

12. Arrangement according to Claims 1 to 11, characterised by the feed tank (29, 59) being equipped with a level control valve (31, 71).

13. Arrangement according to Claim 12, characterised by a drain closable by a valve (28, 79) being fitted on the lower end of the feed tank (29, 59).

14. Arrangement according to claims 12 and 13, characterised by a screen (30) being fitted in the feed tank (29, 59) for the liquor dripping from web (10, 50) prior to the inflow.

15. Arrangement according to Claim 14, characterised by the screen being designed as a rotary screen or filter strip (67) with cleaning nozzles (68).

16. Arrangement according to Claims 1 to 15, characterised by a heat exchanger (25, 62) being fitted for heating the liquor in the pipe for the liquor from the feed tank (29, 59) to the distribution device(s) (37, 38, 65).

17. Arrangement according to claims 1 to 16, characterised by a liquor quantity control being fitted in the liquor guide for the input of the liquor in the distribution devices (37, 38, 65) in relation to the fabric speed (v), the fabric weight (g) and the required percentage liquor addition (f) to the fabric.

## Revendications

1. Disposition pour l'application liquides, en particulier de bains de teinture, sur des nappes de tissu en mouvement, le bain de teinture provenant d'un réservoir (11) étant d'abord conduit dosé dans un petit volume vers un récipient collecteur (29, 59) puis, ensuite, par une pompe (27, 60), de ce récipient collecteur vers un organe distributeur (37, 38, 65) placé au-dessus d'un cylindre déflecteur (35, 53) sans bac plongeur pour la nappe de tissu (10, 50) à travers duquel le bain de teinture coule dans le gousset (39, 80) par le puit se trouvant au-dessus du cylindre déflecteur et formé par la nappe de tissu à imprégner et le cylindre déflecteur dans un rapport d'env. 1,2 à 1,5 (poids du tissu: poids du bain de teinture 1: env. 1,2 ./. 1,5).

2. Disposition d'après la revendication 1 ainsi caractérisée par le fait que plusieurs cylindres déflecteurs (35, 53) placés les uns derrière les autres par rapport à la nappe de tissu (10, 50) et tournant avec les organes de distribution (37, 38, 65) dans le sens de déplacement de la nappe de tissu.

3. Disposition d'après la revendication 1 et 2 ainsi caractérisée par le fait que les organes de distribution (37, 38) ont la forme de tubes avec des buses à jet plan ou à langue disposées sur la largeur de la nappe de tissu.

3. Disposition d'après la revendication 3 ainsi caractérisée par le fait que des buses individuelles ou groupées peuvent être mises hors circuit manuellement ou par télécommande aux extrémités des organes de distribution (37, 38) en fonction de la largeur de la nappe de tissu.

5. Disposition d'après la revendication 3 et 4 ainsi caractérisée par le fait que des rigoles collectrices (36) du bain de teinture placées avant les organes de distribution (37, 38) sont inclinables.

6. Disposition d'après la revendication 1 et 2 ainsi caractérisée par le fait que les organes de distribution (65) sont exécuté) en tant que rigoles de distribution ouvertes dotées de rigoles d'écoulement.

7. Disposition d'après la revendication 6 ainsi caractérisée par le fait que des diaphragmes de dosage (64) sont insérées dans le canal d'arrivée du bain de teinture vers les rigoles de distribution (65).

8. Disposition d'après la revendication 1 ainsi caractérisée par le fait que des cylindres de distribution ou de compensation (34) sont prévues au niveau de la ou des cylindre(s) déflecteur(s) (35, 53), derrière le gousset (39, 80).

9. Disposition d'après la revendication 1 à 8 ainsi caractérisée par le fait que, dans le cas de nappe de tissu sèche (50) lors du traitement, un petit bac plongeur supplémentaire (66) est placé au-dessous du premier cylindre déflecteur (53) sur lequel circule la nappe de tissu.

10. Disposition d'après la revendication 1 à 9 ainsi caractérisée par le fait qu'un exprimeur (14, 15, 57) ainsi que, le cas échéant, un rouleau élargisseur (13, 56) placé en aval de ce dernier soient montés en amont du ou des cylindre(s) déflecteur(s) (35, 53) doté(s) des organes de distribution (37, 38, 65).

11. Disposition d'après la revendication 1 à 10 ainsi caractérisée par le fait que des carters de protection ou des collecteurs (41, 51) sont adjoints au(x) cylindre(s) déflecteur(s) (35, 53) doté(s) des organes de distribution (37, 38, 65), à l'exprimeur (14, 15, 57) et au rouleau élargisseur (13, 56) pour le bain de teinture projeté ou gouttant et qu'ils présentent des rigoles d'écoulement pour le bain de teinture dans le récipient collecteur (29, 59).

12. Disposition d'après la revendication 1 à 11 ainsi caractérisée par le fait que le récipient collecteur (29, 59) est doté d'une vanne de réglage de niveau (31, 71).

13. Disposition d'après la revendication 12 ainsi caractérisée par le fait qu'une rigole d'écoulement pouvant être fermée par une vanne (28, 79) est placée sur l'extrémité inférieure du récipient collecteur (29, 59).

14. Disposition d'après la revendication 12 et 13 ainsi caractérisée par le fait qu'un filtre (30) est placé devant l'entrée du bain de teinture gouttant de la nappe de tissu dans le récipient collecteur (29, 59).

15. Disposition d'après la revendication 14 ainsi caractérisée par le fait que le filtre a la forme d'un filtre ou d'un tamis sans fin (67) tournant et doté de buses de nettoyage (68).

16. Disposition d'après la revendication 1 à 15 ainsi caractérisée par le fait qu'un échangeur thermique (25, 62) est prévu pour le réchauffement du bain de teinture dans la conduite allant du récipient collecteur (29, 59) à ou aux organes de distribution (37, 38, 65).

17. Disposition d'après la revendication 1 à 16 ainsi caractérisée par le fait qu'un régulateur de débit est monté dans la conduite de bain de teinture servant à l'admission dudit bain dans les organes de distribution (37, 38, 65) en fonction de la vitesse de passage de la nappe de tissu (v), du poids de cette nappe (g) et de l'addition de bain souhaitée en pourcent (f) au tissu.

Fig. 1

Fig. 2